# EUROPÄISCHE PATENTSCHRIFT

(11) **EP 1 395 455 B1**
(45) Veröffentlichungstag und Bekanntmachung des Hinweises auf die Patenterteilung: **01.06.2005**
(21) Anmeldenummer: 02747181.2
(22) Anmeldetag: 29.05.2002
(51) Int. Cl.: B60K 15/03

(54) **VERFAHREN ZUR HERSTELLUNG EINER GASDICHTEN DURCHFÜHRUNG EINES KONTAKTES DURCH EINE WANDUNG UND EINRICHTUNG ZUR DURCHFÜHRUNG EINES ELEKTRISCHEN KONTAKTES DURCH EINE WANDUNG**
METHOD FOR PRODUCTION OF A GAS-TIGHT DUCTING FOR A CONTACT THROUGH A WALL AND DEVICE FOR DUCTING AN ELECTRICAL CONTACT THROUGH A WALL
PROCEDE PERMETTANT DE REALISER LA TRAVERSEE ETANCHE AU GAZ D'UN CONTACT DANS UNE PAROI ET INSTALLATION DESTINEE A UN TELLE TRAVERSEE DU CONTACT ELECTRIQUE DANS UNE PAROI

(30) Priorität: 12.06.2001 DE 10128301
(43) Veröffentlichungstag der Anmeldung: 10.03.2004
(73) Patentinhaber: SIEMENS AKTIENGESELLSCHAFT, 80333 München (DE)
(72) Erfinder: SCHLIESE, Oliver, 19061 Schwerin (DE)
(86) Internationale Anmeldenummer: PCT/DE2002/001981
(87) Internationale Veröffentlichungsnummer: WO 2002/100673

(56) Entgegenhaltungen:
- WO-A-02/058954
- DE-U- 29 918 994
- US-A- 3 685 005
- US-A- 4 759 459
- US-A- 5 633 531
- US-A- 5 803 764
- PATENT ABSTRACTS OF JAPAN vol. 2000, no. 08, 6. Oktober 2000 (2000-10-06) & JP 2000 145595 A (KEIHIN CORP), 26. Mai 2000 (2000-05-26)

## Beschreibung

Die Erfindung betrifft ein Verfahren zur Herstellung einer gasdichten Durchführung eines Kontaktes durch eine Wandung, insbesondere einer Wandung eines Kraftstoffbehälters. Weiterhin betrifft die Erfindung eine Einrichtung zur Durchführung eines elektrischen Kontaktes durch eine Wandung, insbesondere eine Wandung eines Kraftstoffbehälters, gemäß dem als Oberbegriff der unabhängigen Ansprüche, siehe DE 299 18 994 U.

Bei aus der Praxis bekannten Durchführungen werden Kontakte meist durch die aus Kunststoff gefertigte Wandung oder eine mit der Wandung verbundenen Träger gepresst, so dass auf beiden Seiten der Wandung jeweils ein Ende der Kontakte übersteht. Anschließend lassen sich auf beiden Seiten der Wandung elektrische Leitungen mit den Kontakten verbinden.

Nachteilig bei der bekannten Einrichtung ist, dass die Verbindung der Kontakte mit angrenzenden Bereichen der Wandung oder des Trägers nur sehr schwierig abgedichtet werden kann. Bei der für den Kraftstoffbehälter vorgesehenen Einrichtung können Kraftstoffdämpfe zwischen den Kontakten und angrenzenden Bereichen des Trägers oder der Wandung hindurchdiffundieren. Hierdurch kann Kraftstoff aus dem Kraftstoffbehälter in die Umgebung gelangen.

Der Erfindung liegt das Problem zugrunde, ein Verfahren der eingangs genannten Art so weiterzubilden, dass die durch die Wandung hindurchzuführenden Kontakte besonders zuverlässig abgedichtet werden. Weiterhin soll eine Einrichtung der eingangs genannten Art geschaffen werden, bei der die Kontakte zuverlässig gegenüber angrenzenden Bereichen abgedichtet sind.

Gemäß der Erfindung wird der Kontakt von der Werkzeugform erzeugt, indem die Kontakte beispielsweise als Bandmaterial der Werkzeugform zugeführt werden und erst durch das Schließen der Werkzeugform vereinzelt bzw. ausgestanzt werden. Anschließend wird ein Teilbereich des Kontaktes in der Werkzeugform mit der Ummantelung umschlossen.

Hierdurch wird in der Werkzeugform eine vormontierbare bauliche Einheit aus Kontakt und Isolator hergestellt. Durch die Umschließung des Kontaktes in der Werkzeugform lässt sich eine besonders hohe Dichtheit der Verbindung zwischen dem Kontakt und der Ummantelung sicherstellen. Durch ein geeignetes Verfahren zur Fertigung der Ummantelung lässt sich die Verbindung des Kontaktes mit der Ummantelung stoffschlüssig gestalten.

Die Ummantelung kann gemäß einer vorteilhaften Weiterbildung der Erfindung aus Keramik gefertigt werden, wenn die Ummantelung im Sinterverfahren erzeugt wird. Hierdurch weist die Ummantelung eine hohe Temperaturbeständigkeit auf.

Die stoffschlüssige Verbindung des Kontaktes mit der Ummantelung lässt sich gemäß einer anderen vorteilhaften Weiterbildung der Erfindung einfach sicherstellen, wenn die Ummantelung im Gussverfahren erzeugt wird. Hierdurch kann die Ummantelung aus Kunststoff oder Glas gefertigt werden.

Das zweitgenannte Problem, nämlich die Schaffung einer Einrichtung, bei der die Kontakte zuverlässig gegenüber angrenzenden Bereichen abgedichtet sind, wird erfindungsgemäß dadurch gelöst, dass der Kontakt und eine einen Teilbereich des Kontaktes umschließende Ummantelung aus einem isolierenden Material als bauliche Einheit gestaltet sind, wobei die Ummantelung eine konische Form aufweist.

Durch diese Gestaltung lassen sich Undichtigkeiten zwischen dem Kontakt und angrenzenden Bereichen zuverlässig vermeiden. Zur Montage kann die Einheit an einem mit der Wandung zu verbindenden Träger oder unmittelbar in der Wandung eingesetzt werden. Das Material der Ummantelung lässt sich derart auswählen, dass es einfach dichtend mit dem Träger oder der Wandung verbunden werden kann.

Durch die konische Form benötigt die Wandung oder der Träger eine konische Ausnehmung, in die die Ummantelung eingedrückt wird. Hierdurch werden zudem Toleranzen zwischen der Ausnehmung in der Wandung oder dem Träger und der Ummantelung ausgeglichen.

Zur weiteren Erhöhung der Zuverlässigkeit der Abdichtung des Kontaktes mit der Ummantelung trägt es gemäß einer vorteilhaften Weiterbildung der Erfindung bei, wenn der Kontakt und die Ummantelung unmittelbar stoffschlüssig miteinander verbunden sind. Durch die unmittelbare Verbindung des Kontaktes mit der Ummantelung ist kein Klebstoff oder dergleichen zur Abdichtung erforderlich.

Die Verbindung des Kontaktes mit der Ummantelung hält gemäß einer anderen vorteilhaften Weiterbildung der Erfindung stand, wenn der Kontakt im Bereich der Ummantelung eine Querschnittsveränderung aufweist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: einen Kontakt mit einer Werkzeugform zur Durchführung des erfindungsgemäßen Verfahrens,
- Fig.2: eine erfindungsgemäße Einrichtung mit einer baulichen Einheit aus einem Kontakt nach Figur 1 und einer Ummantelung,
- Fig.3: die bauliche Einheit aus Figur 2 nach der Montage in einer Wandung.

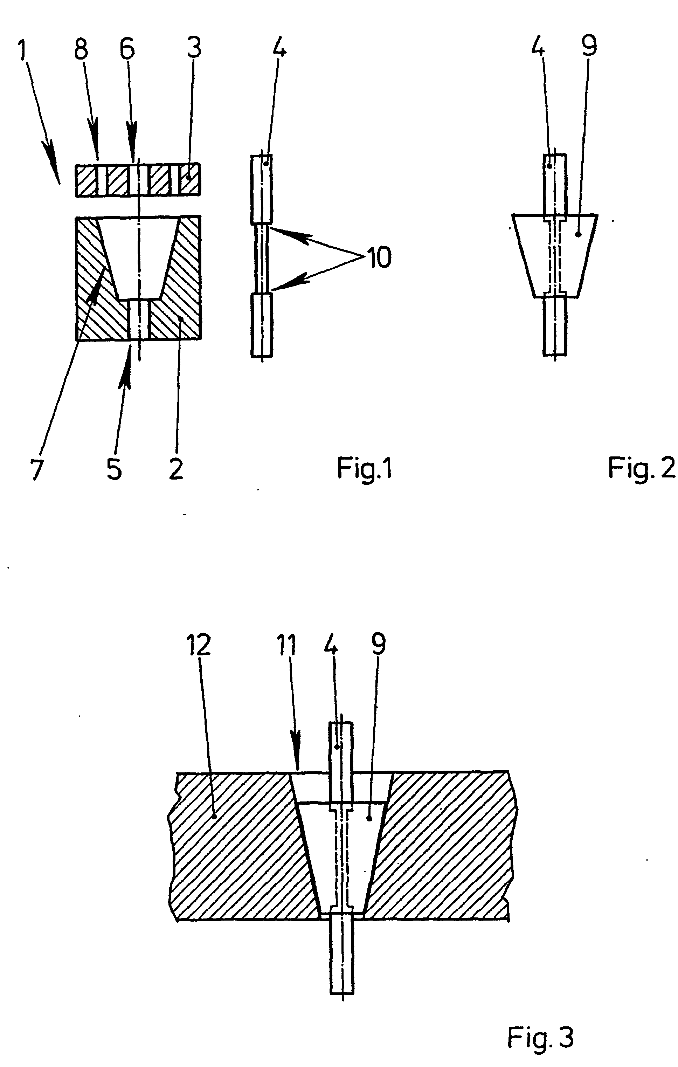

Figur 1 zeigt eine Werkzeugform 1 mit zwei Formteilen 2, 3 und einen Kontakt 4. Bei der Werkzeugform 1 kann es sich beispielsweise um eine Gussform oder eine Sinterform handeln. Die Formteile 2, 3 haben jeweils eine Ausnehmung 5, 6 zur Aufnahme der Enden des Kontaktes 4. Eines der Formteile 2 weist eine konische Ausnehmung 7 auf. Das andere Formteil 3 hat Öffnungen 8 zum Einbringen des Materials einer in Figur 2 dargestellten Ummantelung 9. Der Kontakt 1 hat zwei Querschnittsveränderungen 10, die sich im in die Werkzeugform 1 eingelegten Zustand des Kontaktes 4 innerhalb der konischen Ausnehmung 7 befinden. Zur Fertigung der in Figur 2 dargestellten Ummantelung 9 wird zunächst der Kontakt 4 in eines der Formteile 2, 3 eingesetzt und die Werkzeugform 1 zusammengesetzt. Anschließend wird das die Ummantelung 9 bildende Material durch die Öffnungen 8 in die konische Ausnehmung 7 der Werkzeugform 1 eingebracht. Dieses Einbringen kann im pulverförmigem, flüssigem oder breiigem Zustand erfolgen. Die Fertigung der Ummantelung 9 erfolgt beispielsweise im Sinterverfahren oder im Gussverfahren.

Figur 2 zeigt den Kontakt 4 mit der Ummantelung 9 nach der Entnahme aus der Werkzeugform 1 aus Figur 1. Die Ummantelung 9 bildet mit dem Kontakt 4 eine bauliche Einheit. Diese bauliche Einheit lässt sich, wie in Figur 3 dargestellt, in eine entsprechend gestaltete Ausnehmung 11 einer Wandung 12 einpressen oder mit dieser mittelbar oder unmittelbar stoffschlüssig, z. B. durch Wärmeeinwirkung verbinden.

## Patentansprüche

1. Verfahren zur Herstellung einer gasdichten Durchführung eines Kontaktes durch eine Wandung, insbesondere einer Wandung eines Kraftstoffbehälters, bei dem der Kontakt in eine Werkzeugform eingelegt und in der Werkzeugform ein Teilbereich des Kontaktes mit einer Ummantelung aus einem isolierenden Material umschlossen wird und dass anschließend die Ummantelung mittelbar oder unmittelbar mit der Wandung verbunden wird, **dadurch gekennzeichnet, dass** der Kontakt in der Werkzeugform, insbesondere durch Trennen erzeugt wird.

2. Verfahren nach Anspruch 1, **dadurch gekennzeichnet, dass** die Ummantelung im Sinterverfahren erzeugt wird.

3. Verfahren nach Anspruch 1 oder 2, **dadurch gekennzeichnet, dass** die Ummantelung im Gussverfahren erzeugt wird.

4. Verfahren nach Anspruch 1 bis 3, **dadurch gekennzeichnet, dass** die Kontakte der Werkzeugform in Form von Bandmaterial zugeführt werden.

5. Einrichtung zur Durchführung eines elektrischen Kontaktes durch eine Wandung, insbesondere eine Wandung eines Kraftstoffbehälters, **dadurch gekennzeichnet, dass** der Kontakt (4) und eine einen Teilbereich des Kontaktes (4) umschließende Ummantelung (9) aus einem isolierenden Material als bauliche Einheit gestaltet sind und dass die Ummantelung (9) eine konische Form aufweist.

6. Einrichtung nach Anspruch 5, **dadurch gekennzeichnet, dass** der Kontakt (4) und die Ummantelung (9) unmittelbar stoffschlüssig miteinander verbunden sind.

7. Einrichtung Anspruch 5 oder 6, **dadurch gekennzeichnet, dass** der Kontakt (4) im Bereich der Ummantelung (9) eine Querschnittsveränderung (10) aufweist

## Claims

1. Method for production of a gas-tight ducting for a contact through a wall, in particular a wall of a fuel tank, in which the contact is placed into a mould and a partial region of the contact is surrounded in the mould by a covering made from an insulating material, and in that the covering is then connected indirectly or directly to the wall, **characterized in that** the contact is produced in the mould, in particular by separation.

2. Method according to Claim 1, **characterized in that** the covering is produced by sintering.

3. Method according to Claim 1 or 2, **characterized in that** the covering is produced by casting.

4. Method according to Claim 1 to 3, **characterized in that** the contacts are supplied to the mould in the form of strip material.

5. Device for ducting an electrical contact through a wall, in particular a wall of a fuel tank, **characterized in that** the contact (4) and a covering (9) which surrounds a partial region of the contact (4) and is made from an insulating material are designed as a constructional unit and **in that** the covering (9) has a conical form.

6. Device according to Claim 5, **characterized in that** the contact (4) and the covering (9) are connected directly to each other with a cohesive material joint.

7. Device according to Claim 5 or 6, **characterized in that** the contact (4) has a cross-sectional change (10) in the region of the covering (9).

## Revendications

1. Procédé destiné à la fabrication d'une traversée étanche aux gaz d'un contact à travers une paroi, notamment à travers une paroi d'un réservoir à carburant, au cours duquel le contact est introduit dans un moule à façonner et, dans le moule à façonner, une partie du contact est enrobée d'une gaine en matière isolante et, ensuite, la gaine est liée, directement ou indirectement, à la paroi, **caractérisé par le fait que** le contact est fabriqué dans le moule à façonner, notamment par découpage.

2. Procédé selon la revendication 1 **caractérisé par le fait que** la gaine est fabriquée par un procédé à frittage.

3. Procédé selon la revendication 1 ou 2 **caractérisé par le fait que** la gaine est fabriquée par un procédé à moulage par fusion.

4. Procédé selon la revendication 1 à 3 **caractérisé par le fait que** les contacts sont amenés dans le moule à façonner sous la forme de produit en ruban.

5. Dispositif permettant de monter un contact électrique à travers une paroi, notamment à travers une paroi d'un réservoir à carburant, **caractérisé par le fait que** le contact (4) et une gaine (9) enrobant une partie du contact (4) s ont conçus comme unité constructive composée d'une matière isolante et que la gaine (9) a une forme conique.

6. Dispositif selon la revendication 5 **caractérisé par le fait que** le contact (4) et la gaine (9) sont liés directement l'un à l'autre par assemblage homogène de leurs matières.

7. Dispositif selon la revendication 5 ou 6 **caractérisé par le fait que**, dans la zone de la gaine (9), la section transversale (10) du contact (4) varie.
